# FASCICULE DE BREVET EUROPEEN

(11) **EP 1 225 672 B1**
(45) Date de publication et mention de la délivrance du brevet: **10.11.2004**
(21) Numéro de dépôt: 01400175.4
(22) Date de dépôt: 22.01.2001
(51) Int. Cl.: H02G 5/06, H02B 13/065, H01R 4/60

(54) **Dispositif de contrôle d'arc interne pour module de raccordement d'une ligne haute tension à isolation gazeuse**
Gerät zur Kontrolle eines internen Fehlerlichtbogens für einen Anschlussmodul in einer gasisolierten Hochspannungsleitung
Internal spark control device for a connection module in gas-insulated transmission line

(43) Date de publication de la demande: 24.07.2002
(73) Titulaire: Areva T&D SA, 92309 Levallois-Perret Cedex (FR)
(72) Inventeur: Guillen, Marcel, 38200 Vienne (FR); Cimala, André, 69100 Villeurbanne (FR)
(74) Mandataire: Moutard, Pascal Jean

(56) Documents cités:
- EP-A- 0 660 479
- US-A- 4 550 219
- GUILLEN M ET AL: "Lightning impulse withstand of a gas-insulated line filled with N/sub 2//SF/sub 6/" , ELEVENTH INTERNATIONAL SYMPOSIUM ON HIGH VOLTAGE ENGINEERING (CONF. PUBL. NO.467), PROCEEDINGS OF 11TH INTERNATIONAL SYMPOSIUM ON HIGH-VOLTAGE ENGINEERING (ISH 99), LONDON, UK, 23-27 AUG. 1999 , 1999, LONDON, UK, IEE, UK, PAGE(S) 71 - 74 VOL.3 XP002169073 ISBN: 0-85296-719-5 * le document en entier *

## Description

L'invention a pour objet une structure interne de module de raccordement d'une ligne haute tension à isolation gazeuse dans un réseau de transport d'énergie électrique. On désigne par module une structure tubulaire, typiquement d'une longueur de un à deux mètres, destinée à raccorder électriquement et mécaniquement des tronçons de ligne constitués chacun d'un conducteur tubulaire disposé de façon coaxiale à l'intérieur d'une enveloppe tubulaire remplie d'un gaz diélectrique sous pression. Le raccordement de tronçons de ligne par des modules présente un avantage économique certain. Il permet de produire sur un site approprié les pièces de base, généralement longues et relativement lourdes, que constituent les conducteurs et les enveloppes tubulaires des tronçons, et de produire sur un autre site les modules de raccordement. Ces divers éléments ont en effet des caractéristiques de fabrication très différentes, et les modules présentent une technicité bien plus complexe que les conducteurs ou les enveloppes des tronçons. Il est à noter que les modules peuvent comporter des capteurs intégrés pour la surveillance de la ligne. Il est en conséquence possible de ne rassembler ces divers éléments qu'une fois sur le site d'installation ou à proximité de ce site.

Il est connu des brevets EP0660479 et EP0888657 des modules de raccordement comportant chacun:
- une structure tubulaire extérieure métallique dont les deux extrémités sont dotées chacune de moyens lui permettant de se raccorder à une extrémité d'une enveloppe tubulaire d'un tronçon de ligne à raccorder;
- une structure tubulaire intérieure constituée d'un matériau conducteur, positionnée de façon sensiblement coaxiale à la structure tubulaire extérieure, et dont chaque extrémité est dotée d'un moyen d'accouplement de forme tubulaire permettant de raccorder ladite structure à une extrémité d'un conducteur tubulaire d'un tronçon de ligne;
- une structure intermédiaire de positionnement aussi appelée cône d'isolation ou isolateur, constituée d'un matériau isolant et par l'intermédiaire de laquelle la structure tubulaire intérieure du module est maintenue à l'intérieur de la structure tubulaire extérieure.

Le cône d'isolation constitue généralement un point faible d'isolation électrique entre le conducteur transportant le courant de phase et l'enveloppe du module qui est reliée à la terre, notamment du fait que des particules métalliques telles que des copeaux peuvent être présentes à la surface de l'isolateur et y constituer un point d'amorçage d'arc électrique. La présence de telles particules sur l'isolateur d'un module est relativement probable lorsque le module sort de fabrication: il faut en effet un certain temps de fonctionnement de la ligne avant que la plupart de ces particules ne se déplacent et se fixent dans des pièges prévus à cet effet dans la ligne, sous l'effet conjugué de la gravitation et du champ électrique alternatif. Pendant les tests de fonctionnement d'un module qui se déroulent sous forte tension et puissance modérée, il peut se produire l'amorçage d'un arc électrique avec le risque important que cet arc forme une racine sur l'isolateur qui se carbonise localement. Il faut noter que la tension généralement utilisée lors des tests est bien supérieure à la tension nominale prévue en exploitation, et que la puissance consommée est par contre inférieure à celle que peut fournir un réseau en technologie blindée. Le matériau de l'isolateur ne se régénère généralement pas après l'amorçage, et la présence de carbone à la surface affecte les propriétés du cône d'isolation. Cette détérioration de surface implique la réparation ou le remplacement du cône, car celui-ci présente alors un risque en exploitation en cas de surtension sur la ligne. Au contraire l'amorçage d'un arc à distance de l'isolateur ne produit généralement pas de détérioration significative sur l'enveloppe métallique d'une ligne ou d'un module de ligne, surtout si la puissance consommée par l'arc reste modérée comme c'est le cas lors de tests.

Le phénomène de détérioration d'un isolateur par un arc interne est bien connu et a conduit à adopter pour les lignes à isolation gazeuse des distances d'isolation entre le conducteur et l'enveloppe de la ligne suffisantes pour éviter autant que possible le risque d'amorçage d'arc aussi bien lors des essais qu'en exploitation. Afin de limiter encore le risque d'amorçage d'arc sur un isolateur sans augmenter le diamètre de la ligne, voire en le diminuant, il est connu des dispositifs dits "éclateurs" dans des lignes à isolation au SF₆ où les conducteurs centraux sont maintenus par des isolateurs, permettant qu'un éventuel arc électrique soit relativement éloigné de tout isolateur et se produise essentiellement en des zones prévues à cet effet. Par exemple, le brevet FR2253256 divulgue une réalisation où l'enveloppe de la ligne présente au voisinage de l'isolateur une surface intérieure sous la forme d'une doublure métallique, et où le conducteur électrique présente aux points de sollicitation maximale par les arcs électriques une surface réalisée en une matière conductrice résistant à l'arc. Il faut noter que dans l'état de la technique des lignes blindées, le milieu isolant utilisé est généralement du SF₆ pur ou en tant que composant principal d'un mélange. Or, un arc électrique formé dans du SF₆ est généralement très fin, ce qui provoque un échauffement très localisé du métal avec éventuellement une fusion consécutive en fonction de la puissance de l'arc et de la nature du métal. De surcroît, lorsqu'un arc se produit dans du SF₆, le fluor produit par dissociation de ce gaz peut réagir avec l'aluminium pour produire une réaction chimique exothermique qui peut empêcher la régénération, c'est à dire la recomposition du gaz après son ionisation. C'est pourquoi la matière conductrice utilisée pour des éclateurs de surtension dans l'état de la technique est différente de l'aluminium lorsque le milieu isolant est majoritairement du SF₆.

Dans l'état de la technique récent, il a été prouvé qu'il est possible d'utiliser comme milieu isolant un mélange de gaz dans lequel du SF₆ est en proportion minoritaire. Par exemple, un mélange N₂/SF₆ dans des proportions de 90/10 à 80/20 possède de bonnes propriétés isolantes. Un tel mélange présente des avantages certains, et notamment celui de diffuser par ramifications le point d'ancrage d'un arc électrique sur une zone métallique, ce qui limite fortement le risque local d'échauffement excessif et de fusion du métal. En outre, le risque de réaction chimique exothermique est écarté, et le SF₆ dissocié se régénère rapidement.

La demanderesse a quant à elle étudié la possibilité de réduire la section tubulaire de lignes à isolation gazeuse formées de tronçons raccordés bout à bout par des modules de raccordement, en limitant au maximum le risque d'apparition d'arc électrique sur un isolateur d'un module ainsi qu'entre le conducteur central et l'enveloppe d'un tronçon de ligne. Elle a ainsi cherché à réaliser dans un module un éclateur de surtension simple et économique, permettant d'éliminer les éventuelles surtensions d'amorçage qui pourraient survenir entre le conducteur et l'enveloppe afin qu'un éventuel arc se produise exclusivement dans une zone déterminée du module et à une distance suffisante de l'isolateur pour ne pas l'affecter. Elle a conçu une structure interne de module qui comprend un éclateur de surtension à symétrie de révolution et situé dans une zone annulaire longitudinale déterminée, afin qu'une surtension d'amorçage ne puisse exister qu'au niveau de cette zone. Un tel éclateur de surtension doit tout d'abord permettre de pouvoir continuer les tests d'un module après qu'un arc électrique ait été provoqué, sans nécessiter le remplacement du cône d'isolation. Il doit aussi permettre autant que possible de poursuivre l'exploitation d'une ligne comportant un module selon l'invention, après une surtension ayant provoqué un arc interne au niveau de l'éclateur.

L'invention a donc pour objet un module de raccordement pour ligne haute tension à isolation gazeuse dans un réseau de transport d'énergie électrique, destiné à raccorder électriquement et mécaniquement des tronçons de ligne constitués chacun d'un conducteur tubulaire disposé de façon coaxiale à l'intérieur d'une enveloppe tubulaire remplie d'un gaz diélectrique sous pression, comportant une structure tubulaire extérieure métallique, une structure tubulaire intérieure dotée de moyens d'accouplement, et une structure intermédiaire de positionnement, caractérisé en ce qu'un premier moyen d'accouplement de la structure tubulaire intérieure forme une douille cylindrique comprenant une cavité dans laquelle vient s'enficher l'extrémité dudit conducteur tubulaire, ladite douille cylindrique comportant à son extrémité une première zone annulaire de surface externe convexe située sensiblement en vis à vis d'une seconde zone annulaire de la paroi interne de la structure tubulaire extérieure, ladite seconde zone annulaire comportant des protubérances qui sont ménagées sur ladite paroi interne et qui débouchent au moins au niveau de la surface délimitant cette paroi, et en ce que les première et seconde zones annulaires se situent à distance de la structure intermédiaire et sont agencées pour constituer un éclateur d'élimination des éventuelles surtensions d'amorçage entre le conducteur et l'enveloppe d'un des tronçons de ligne à raccorder afin que le risque d'un éventuel amorçage d'arc dans la ligne se situe exclusivement au niveau desdites zones annulaires.

Dans un mode de réalisation d'un module de raccordement selon l'invention, lesdites protubérances sont formées par évidement de matière de la paroi interne de la structure tubulaire extérieure et débouchent au niveau de la surface délimitant cette paroi, afin notamment que la seconde zone annulaire constitue un piège à particules métalliques. L'évidement de matière peut avantageusement consister en des rainures annulaires coaxiales.

L'invention, ses caractéristiques et ses avantages sont précisés dans la description qui suit en liaison avec les figures évoquées ci-dessous.
La figure 1 représente schématiquement une ligne électrique haute tension à isolation gazeuse, constituée de tronçons raccordés par des modules.
La figure 2 représente une vue en coupe axiale d'un module de raccordement selon l'invention et de deux tronçons de ligne dont il permet le raccordement.
La figure 3 est un agrandissement d'une portion de la figure 2, représentant en demi coupe la zone annulaire d'un éclateur de surtension dans un module de raccordement selon l'invention.
La figure 4 est une variante de réalisation du dispositif représenté à la figure 3.

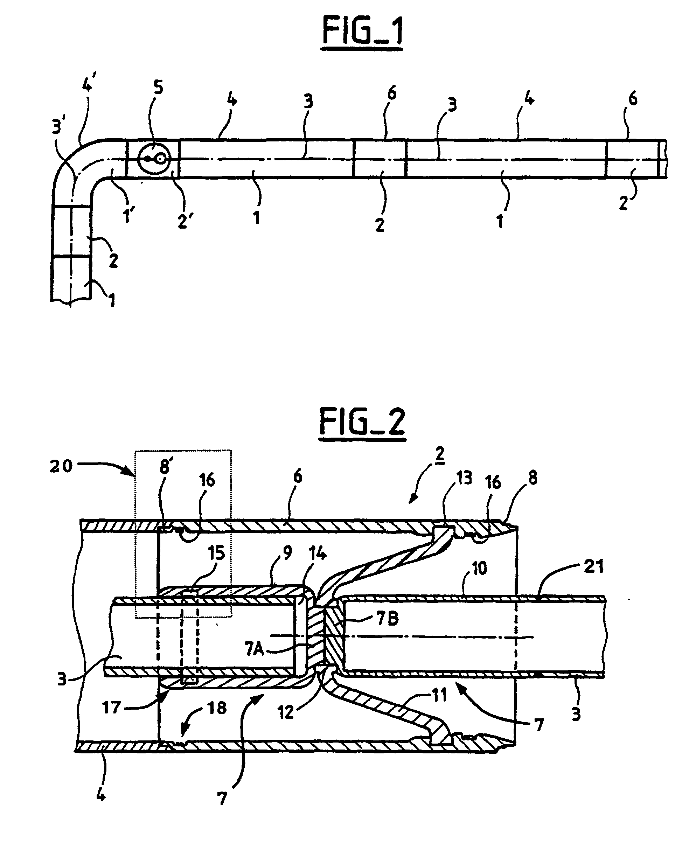

La ligne électrique haute tension, à isolation gazeuse schématiquement illustrée sur la figure 1 est supposée composée à l'aide de tronçons de ligne 1, 1' raccordés bout à bout par l'intermédiaire de modules de raccordement 2, 2'. Chaque tronçon comporte un conducteur tubulaire 3 ou 3' disposé longitudinalement à l'intérieur d'une enveloppe tubulaire 4 ou 4' qui est rempli de gaz d'isolement, par exemple un mélange à base d'hexafluorure de soufre (SF₆) et d'azote (N₂). Les tronçons 1, les conducteurs 3 et les enveloppes 4 sont ici supposés rectilignes, alors que le tronçon 1', le conducteur 3' et l'enveloppe 4' sont supposés cintrés. Les tronçons rectilignes sont généralement des éléments constitués par des conducteurs tubulaires axiaux 3 et par des enveloppes 4 qui sont de grande longueur, par exemple de l'ordre de la dizaine de mètres. Un module de raccordement 2 ou 2' est prévu pour être interposé entre deux tronçons disposés bout à bout, et comporte une structure tubulaire extérieure 6 à l'intérieur de laquelle est positionnée longitudinalement une structure tubulaire intérieure 7. Cette structure tubulaire 7 peut être une structure monobloc, ou aussi être constituée en deux parties tubulaires maintenues solidaires par leurs embases 7A et 7B accolées l'une à l'autre par des moyens de vissage, tel qu'illustré sur la figure 2. Dans le cas d'une structure monobloc, celle-ci est constituée par une pièce métallique, préférablement en aluminium, qui est usinée ou moulée. La structure intermédiaire 11, qui est réalisée en un matériau moulé tel que de la résine, est alors susceptible d'être directement coulée dans un moule en plusieurs parties autour duquel les structures tubulaires intérieure et extérieure du module ont préalablement été positionnées.

Une structure tubulaire intérieure 7 comprend à une première extrémité des premiers moyens d'accouplement 9 en forme de douille, de diamètre supérieur à celui d'un conducteur tubulaire 3 de tronçon de ligne, de façon à réaliser une interconnexion dissociable avec le conducteur 3 qui est prévu pour venir s'enficher dans la douille lors du montage de la ligne. Elle comprend à une seconde extrémité des second moyens d'accouplement 10 aussi en forme de douille et permettant de réaliser une interconnexion fixe ou dissociable avec un conducteur tubulaire 3 d'un autre tronçon de ligne. Cet autre conducteur tubulaire 3 est préférablement raccordé de façon fixe, par exemple par une soudure classique 21, en bout de l'extrémité ouverte des second moyens d'accouplement 10.

La structure tubulaire intérieure 7 et la structure tubulaire extérieure 6 du module sont fixées l'une à l'intérieur de l'autre par une structure intermédiaire de positionnement 11, réalisée en matériau isolant et généralement appelée cône d'isolation car préférablement de forme tronconique. Ce cône 11 est centré sur un axe longitudinal qui est commun aux trois structures du module, et comporte une ouverture circulaire 12 de même axe dans laquelle viennent s'accoler les embases discoïdales 7A et 7B. Ces embases ont le même diamètre extérieur que ladite ouverture circulaire, afin d'être maintenues fermement centrées selon l'axe longitudinal du module et d'assurer une bonne étanchéité au gaz au niveau de leur périphérie. Le positionnement des moyens d'accouplement 9 et 10 ainsi réalisé, de part et d'autre de la zone où leurs embases 7A et 7B sont enserrées par le cône d'isolation 11, permet d'équilibrer les efforts supportés par ce cône du fait du poids des deux conducteurs tubulaires 3 raccordés.

Dans une forme de réalisation, la structure intermédiaire 11 d'un module est pleine pour empêcher tout passage du gaz d'isolement contenu dans un tronçon de ligne au travers du module. Dans une variante de réalisation, cette structure intermédiaire 11 est ajourée, des ouvertures étant ménagées dans la partie conique s'étendant entre les structures tubulaires intérieure et extérieure, pour permettre une circulation de gaz d'isolement entre les deux tronçons de ligne que le module permet de raccorder.

Le cône ou structure intermédiaire 11 est fixé dans une rainure circulaire intérieure 13 de la structure tubulaire extérieure 6, à proximité d'une des extrémités de cette dernière. Les deux extrémités de cette structure 6 sont pourvues de moyens d'accouplement 8, 8' visibles sur la figure 2, qui permettent la fixation et le raccordement électrique de deux enveloppes de tronçons de ligne de part et d'autre du module.

Les premiers moyens d'accouplement 9 sont réalisés sous la forme d'une douille cylindrique de diamètre intérieur suffisant pour permettre à une extrémité d'un conducteur tubulaire 3 de s'y enficher. Cette douille comporte une cavité 14 dont la profondeur est choisie pour permettre un coulissement limité du conducteur tubulaire qui s'y enfiche. Ce coulissement est nécessaire en premier lieu lors du montage, et ensuite en cas de variations de la longueur du tronçon liées à des variations de température lorsque une partie de la ligne est située dans un environnement où la température varie. Le raccordement électrique des premiers moyens d'accouplement 9 avec le conducteur 3 est réalisé soit par contact métallique direct, soit par l'intermédiaire d'au moins un contact glissant 15 situé dans la cavité 14.

Dans un module de raccordement selon l'invention, la douille cylindrique formant les premiers moyens d'accouplement 9 a un diamètre supérieur à celui des conducteurs tubulaires 3 et à celui de la douille cylindrique constituant les second moyens d'accouplement 10, ce qui implique que le champ électrique moyen entre la surface externe des premiers moyens d'accouplement 9 et la surface interne de la structure tubulaire extérieure 6 est supérieur au champ électrique présent ailleurs entre le conducteur et l'enveloppe de la ligne. De plus, l'extrémité ouverte de ces premiers moyens d'accouplement présente une première zone annulaire 17 de surface externe 17' arrondie avec une certaine convexité, de façon à ce que cette première zone constitue une zone de déclenchement et d'ancrage d'arc électrique en cas de surtension sur la ligne.

En outre, une seconde zone annulaire 18 est prévue sur la paroi interne de la structure tubulaire extérieure 6, sensiblement en vis à vis de la première zone annulaire, c'est à dire au même niveau longitudinal dans le module. Cette seconde zone annulaire comporte des protubérances 16 qui sont ménagées sur ladite paroi interne et qui débouchent au moins au niveau de la surface 5 délimitant cette paroi. De telles protubérances forment des points d'ancrage des éventuels arcs électriques prenant naissance au niveau de la première zone annulaire. Les première et seconde zones annulaires 17 et 18 se situent à une distance suffisante de la structure intermédiaire 11 afin que les éventuels arcs électriques ne puissent affecter cette structure. L'ensemble réalisé par ces zones annulaires constitue un éclateur d'élimination des éventuelles tensions d'amorçage entre le conducteur 3 et l'enveloppe 4 de la ligne. Il est ainsi possible d'éliminer quasiment tout risque d'amorçage non seulement dans un tronçon de ligne, mais aussi dans la zone d'un module où se situe la structure intermédiaire 11. Il convient de rappeler que le matériau isolant qui constitue la structure intermédiaire ne se régénère pas après amorçage, d'où l'intérêt d'éliminer tout risque d'arc électrique qui pourrait prendre racine sur cette structure isolante.

Le raccordement électrique des premiers moyens d'accouplement 9 avec le conducteur 3 peut être réalisé par l'intermédiaire de moyens connus consistant en au moins un contact glissant 15 situé dans la cavité 14, un joint anti-poussières pouvant compléter le dispositif au voisinage du contact 15 ou accolé à ce dernier. La présence d'un contact glissant 15 tel que représenté sur les figures 2 à 4 permet avantageusement d'accentuer l'effet d'extrémité procuré par l'arrondi de la première zone annulaire 17, grâce au rétrécissement local de l'épaisseur de la douille cylindrique formant les premiers moyens d'accouplement 9 du fait de l'évidement de matière nécessaire à l'insertion du contact 15. Un tel profil de découpe pour l'extrémité de la douille, de façon analogue à la pointe de choc d'un paratonnerre, procure un effet d'extrémité aboutissant à ce qu'un éventuel arc électrique ne puisse prendre racine qu'exclusivement sur cette première zone annulaire 17.

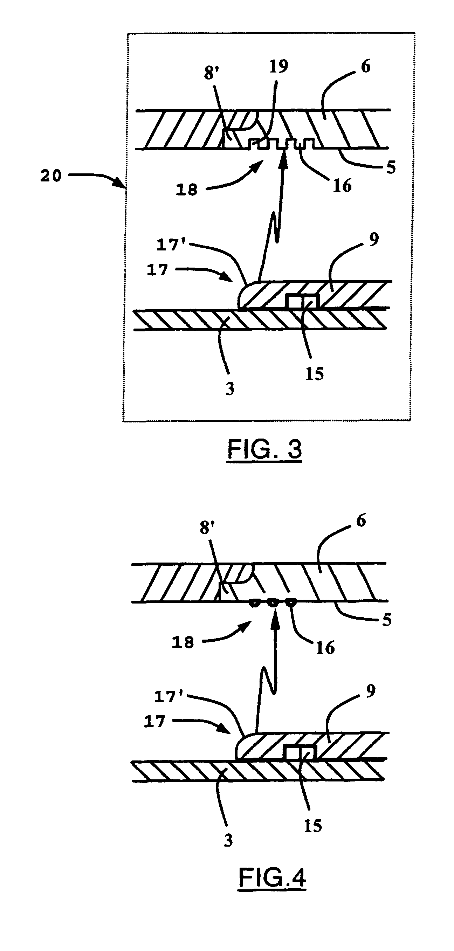

Au niveau de la seconde zone annulaire, les protubérances 16 peuvent consister en des inserts annulaires coaxiaux réalisés en un matériau conducteur identique ou différent de celui qui compose l'enveloppe 6, et fixés sur la paroi interne de la structure tubulaire extérieure 6 pour faire saillie hors de la surface 5 délimitant cette paroi. Une telle réalisation est représentée à la figure 4.

Les protubérances 16 peuvent aussi être formées par évidement de matière de la paroi interne de la structure tubulaire extérieure, par exemple en creusant des rainures annulaires 19 de façon à obtenir dans la seconde zone annulaire 18 une surface crénelée en coupe longitudinale telle que représentée aux figures 2 et 3. Ces protubérances sont alors formées par les bosses des créneaux et débouchent au niveau de la surface 5. Bien que les protubérances ne débouchent pas en deçà de la surface 5, elle procurent néanmoins un effet de pointe pour le champ électrique. La demanderesse a calculé et a pu vérifier qu'avec un tel rainurage de la seconde zone annulaire, le champ électrique entre les zones annulaires 17 et 18 est tel qu'à partir d'une certaine valeur de surtension, un éventuel arc électrique se produit exclusivement entre ces deux zones annulaires et prend racine sur chaque zone.

Pour cette forme de réalisation, il est préférable d'utiliser comme milieu isolant un mélange gazeux dans lequel du SF₆ est en proportion minoritaire, afin notamment de limiter fortement le risque d'échauffement excessif des protubérances sur lesquelles un arc prendrait racine, grâce à la ramification de l'arc dans un tel mélange. Les structures tubulaires intérieure et extérieure 7 et 6 peuvent alors avantageusement être entièrement réalisées en aluminium, tout en permettant à l'éclateur de surtension de supporter des arcs de relativement forte puissance survenant dans une ligne en exploitation. Des essais on montré qu'il est possible d'utiliser un mélange N₂/SF₆ dans des proportions voisines de 90/10, qui présente de bonnes propriétés de régénération suite à un arc.

Les creux entre les protubérances constituent avantageusement, en partie basse d'un module, des pièges à particules métalliques du fait de la diminution du champ électrique entre une bosse et un creux. Ces particules qui sont par exemple produites dans les zones de contact entre des éléments mobiles l'un par rapport à l'autre, ou introduites lors d'interventions depuis l'extérieur, se déplacent sous l'effet conjugué de la gravitation et du champ électrique alternatif. Les pièges permettent d'arrêter le déplacement des particules à l'intérieur des tronçons et modules et d'éviter au maximum leur dépôt sur un isolateur. Il est à noter qu'une réalisation avec des inserts annulaires tels que représentés à la figure 4 procure aussi la même fonction de piège à particules.

La réalisation des protubérances par évidement de matière permet un usinage relativement simple de la seconde zone annulaire 18 à partir de la structure tubulaire extérieure 6. Son coût est avantageux par rapport à une réalisation avec des inserts annulaires. Bien entendu, l'évidement de matière n'est pas limité à un rainurage et d'autres réalisations peuvent être envisagées, par exemple un évidemment de faible profondeur en forme de quadrillage laissant affleurer des protubérances au niveau de la surface 5.

## Revendications

1. Module (2) de raccordement pour ligne haute tension à isolation gazeuse dans un réseau de transport d'énergie électrique, destiné à raccorder électriquement et mécaniquement des tronçons de ligne (1,1') constitués chacun d'un conducteur tubulaire (3, 3') disposé de façon coaxiale à l'intérieur d'une enveloppe tubulaire (4, 4') remplie d'un gaz diélectrique sous pression, comportant:
- une structure tubulaire extérieure (6) métallique dont les deux extrémités sont dotées chacune de moyens (8, 8') lui permettant de se raccorder à une extrémité de l'enveloppe tubulaire d'un des tronçons de ligne à raccorder;
- une structure tubulaire intérieure (7) constituée d'un matériau conducteur, positionnée de façon coaxiale à la structure tubulaire extérieure, et dont chaque extrémité est dotée d'un premier ou d'un second moyen d'accouplement (9, 10) de forme tubulaire permettant de raccorder ladite structure à une extrémité du conducteur tubulaire (3, 3') d'un des tronçons de ligne à raccorder;
- une structure intermédiaire de positionnement (11) constituée d'un matériau isolant, par l'intermédiaire de laquelle la structure tubulaire intérieure (7) du module est maintenue à l'intérieur de la structure tubulaire extérieure (6);
**caractérisé en ce qu'**un premier moyen d'accouplement (9) de la structure tubulaire intérieure forme une douille cylindrique comprenant une cavité (14) dans laquelle vient s'enficher l'extrémité dudit conducteur tubulaire (3, 3'), ladite douille comportant à son extrémité ouverte une première zone annulaire (17) de surface externe convexe située sensiblement en vis à vis d'une seconde zone annulaire (18) de la paroi interne de la structure tubulaire extérieure (6) métallique, ladite seconde zone annulaire comportant des protubérances (16) qui sont formées par des évidements de métal de ladite paroi interne ou consistent en des inserts métalliques fixés directement à cette paroi, et **en ce que** lesdites zones annulaires (17,18) se situent à distance de la structure intermédiaire (11) et sont agencées pour constituer un éclateur d'élimination des éventuelles surtensions d'amorçage entre le conducteur (3,3') et l'enveloppe (4, 4') d'un des tronçons de ligne à raccorder afin que le risque d'un eventuel amorçage d'arc dans la ligne se situe exclusivement au niveau de ces zones annulaires.

2. Module selon la revendication 1 dans lequel les protubérances (16) sont formées par des évidements de métal de la paroi interne de la structure tubulaire extérieure (6) et débouchent au niveau de la surface (5) délimitant cette paroi, afin des particules métalliques puissent rester piégées dans ces évidements.

3. Module selon la revendication 2 dans lequel l'évidement de matière consiste en des rainures annulaires (19) coaxiales.

4. Module selon la revendication 1 dans lequel les protubérances (16) sont formées par des inserts annulaires coaxiaux.

5. Module selon l'une des revendications 1 à 4 dans lequel un contact glissant annulaire (15) est positionné dans un évidement de la paroi tubulaire interne de la douille qui est formée par le premier moyen d'accouplement (9), au voisinage de la première zone annulaire (17) de façon à renforcer l'effet d'extrémité procuré par cette première zone pour aider à ce qu'un éventuel amorçage d'arc se produise exclusivement au niveau des première et seconde zones annulaires.

6. Module selon l'une des revendications 1 à 5 dans lequel la structure tubulaire intérieure (7) est réalisée en une seule pièce métallique monobloc.

7. Module selon la revendication 6 dans lequel la pièce métallique monobloc est réalisée en un matériau moulé et est directement coulée dans un moule autour duquel les structures tubulaires intérieure et extérieure ont préalablement été positionnées.

8. Module selon l'une des revendications 1 à 7 dans lequel la structure tubulaire intérieure (7) et la structure tubulaire extérieure (6) métallique sont en aluminium, alors que la structure intermédiaire (11) est en résine moulée.

9. Module selon la revendication 8 dans lequel le milieu isolant est un mélange gazeux N₂/SF₆ dans des proportions comprises entre 90/10 et 80/20.

## Patentansprüche

1. Verbindungsmodul (2) für Hochspannungsleitungen mit Gasisolierung in einem Transportnetz für elektrische Energie, welches dazu bestimmt ist, elektrisch und mechanisch Leitungsteilabschnitte (1,1') zu verbinden, welche jeweils gebildet werden aus einem röhrenförmigen Leiter (3,3'), welcher koaxial im Inneren einer röhrenförmigen Hülle (4,4'), welche mit einem unter Druck stehenden dielektrischen Gas gefüllt ist, angeordnet ist, umfassend:
- eine äußere metallische röhrenförmige Struktur (6), deren beide Enden jeweils mit Mitteln (8,8') ausgestattet sind, welche es dieser erlauben, sich mit einem Ende der röhrenförmigen Hülle eines der zu verbindenden Leitungsteilabschnitte zu verbinden,
- eine innere röhrenförmige Struktur (7), welche aus einem leitfähigen Material gebildet wird, welche koaxial zu der äußeren röhrenförmigen Struktur positioniert ist und von der jedes Ende mit einem ersten oder einem zweiten Kopplungsmittel (9,10) von röhrenförmiger Form ausgestattet ist, welches es erlaubt, die Struktur mit einem Ende des röhrenförmigen Leiters (3,3') von einem der zu verbindenden Leitungsteilabschnitte zu verbinden,
- eine dazwischenliegende Positionierungsstruktur (11), welche aus einem isolierenden Material gebildet wird, mit Hilfe von welcher die innere röhrenförmige Struktur (7) des Moduls im Inneren der äußeren röhrenförmigen Struktur (6) gehalten wird,
**dadurch gekennzeichnet, dass** ein erstes Kopplungsmittel (9) der inneren röhrenförmigen Struktur eine zylindrische Hülse bildet, welche einen Hohlraum (14) umfasst, in welchen das Ende des röhrenförmigen Leiters (3,3') sich hineinschieben wird, wobei die Hülse an ihrem offenen Ende eine erste ringförmige Zone (17) mit einer konvexen äußeren Oberfläche umfasst, die sich im wesentlichen gegenüber einer zweiten ringförmigen Zone (18) der inneren Wand der äußeren metallischen röhrenförmigen Struktur (6) befindet, wobei die zweite ringförmige Zone Protuberanzen (16) umfasst, die durch Vertiefungen des Metalls der inneren Wand gebildet werden oder aus metallischen Einsatzteilen, die direkt an dieser Wand befestigt sind, bestehen, und dass die ringförmigen Zonen (17,18) sich in einem Abstand zu der dazwischenliegenden Struktur (11) befinden und so eingerichtet sind, dass sie einen Entlader für die Beseitigung der gegebenfalls auftretenden Initialzündungs-Überspannungen zwischen dem Leiter (3,3') und der Hülle (4,4') von einem der zu verbindenden Leitungsteilabschnitte bilden, damit das Risiko einer gegebenenfalls auftretenden Lichtbogenzündung in der Leitung sich ausschließlich auf der Höhe dieser ringförmigen Zonen befindet.

2. Modul nach Anspruch 1, bei welchem die Protuberanzen (16) durch Vertiefungen des Metalls der inneren Wand der äußeren röhrenförmigen Struktur (6) gebildet werden und auf der Höhe der Oberfläche (5), welche diese Wand begrenzt, münden, damit metallische Teilchen in diesen Vertiefungen eingefangen bleiben können.

3. Modul nach Anspruch 2, bei welchem die Materialvertiefung aus koaxialen ringförmigen Rillen (19) besteht.

4. Modul nach Anspruch 1, bei welchem die Protuberanzen (16) durch koaxiale ringförmige Einsatzteile gebildet werden.

5. Modul nach einem der Ansprüche 1 bis 4, bei welchem ein ringförmiger Gleitkontakt (15) in einer Vertiefung der inneren röhrenförmigen Wand der Hülse, die durch das erste Kopplungsmittel (9) gebildet wird, in der Nähe der ersten ringförmigen Zone (17) positioniert ist derart, dass der Endeffekt, welcher durch diese erste Zone bewirkt wird, verstärkt wird, um dazu beizutragen, dass eine gegebenenfalls erfolgende Lichtbogenzündung ausschließlich auf der Höhe der ersten und zweiten ringförmigen Zone erfolgt.

6. Modul nach einem der Ansprüche 1 bis 5, bei welchem die innere röhrenförmige Struktur (7) aus einem einzigen metallischen Einblock-Teil hergestellt ist.

7. Modul nach Anspruch 6, wobei das metallische Einblock-Teil aus einem in einer Form gegossenen Material hergestellt wird und direkt in eine Gießform, um welche herum die innere und die äußere röhrenförmige Struktur vorab positioniert worden sind, gegossen wird.

8. Modul nach einem der Ansprüche 1 bis 7, bei welchem die innere röhrenförmige Struktur (7) und die äußere metallische röhrenförmige Struktur (6) aus Aluminium bestehen, wohingegen die dazwischenliegende Struktur (11) aus einem in einer Form gegossenen Harz besteht.

9. Modul nach Anspruch 8, bei welchem das isolierende Medium eine gasförmige N₂/SF₆-Mischung in Verhältnissen zwischen 90/10 und 80/20 einschließlich ist.

## Claims

1. Connection module (2) for a high-voltage gas-insulated transmission line in an electric power transport network, intended for electrically and mechanically connecting transmission line sections (1, 1') each consisting of a tubular conductor (3, 3') placed coaxially inside a tubular sheath (4, 4') filled with a pressurized dielectric gas, comprising:
- an outer tubular metal structure (6), the two ends of which are each provided with means (8, 8') allowing it to be connected to one end of the tubular sheath of one of the sections of transmission line to be connected;
- an inner tubular structure (7) made of a conducting material, positioned coaxially with the outer tubular structure and each end of which is provided with a first or a second coupling means (9, 10) of tubular shape, allowing the said structure to be connected to one end of the tubular conductor (3, 3') of one of the sections of transmission line to be connected;
- an intermediate positioning structure (11) made of an insulating material, by means of which the inner tubular structure (7) of the module is held in place inside the outer tubular structure (6);
**characterized in that** a first coupling means (9) of the inner tubular structure forms a cylindrical socket comprising a cavity (14) into which the end of the said tubular conductor (3, 3') is plugged, the said socket having, at its open end, a first annular region (17) of convex external surface placed so as to substantially face a second annular region (18) of the internal wall of the outer tubular metal structure (6), the said second annular region having protuberances (16) that are formed by recesses in the metal of the said internal wall or consist of metal inserts fixed directly to this wall, and **in that** the said annular regions (17, 18) are located some distance from the intermediate structure (11) and are designed to constitute a spark gap for eliminating any initiating overvoltages between the conductor (3, 3') and the sheath (4, 4') of one of the sections of transmission line to be connected, so that the risk of any arc initiation in the transmission line occurs exclusively in these annular regions.

2. Module according to Claim 1, in which the protuberances (16) are formed by recesses in the metal of the internal wall of the outer tubular structure (6) and emerge at the surface (5) defining this wall, so that metal particles can remain trapped in these recesses.

3. Module according to Claim 2, in which the recesses in the material consist of coaxial annular grooves (19).

4. Module according to Claim 1, in which the protuberances (16) are formed by coaxial annular inserts.

5. Module according to one of Claims 1 to 4, in which an annular sliding contact (15) is positioned in a recess in the internal tubular wall of the socket that is formed by the first coupling means (9), close to the first annular region (17), so as to enhance the end effect provided by this first region in order thereby to ensure that any arc initiation takes place exclusively in the first and second annular regions.

6. Module according to one of Claims 1 to 5, in which the inner tubular structure (7) is made as a single one-piece metal part.

7. Module according to Claim 6, in which the one-piece metal part is made of a moulded material and is cast directly in a mould around which the inner and outer tubular structures have been positioned beforehand.

8. Module according to one of Claims 1 to 7, in which the inner tubular metal structure (7) and the outer tubular metal structure (6) are made of aluminium, while the intermediate structure (11) is made of a moulded resin.

9. Module according to Claim 8, in which the insulating medium is an N₂/SF₆ gas mixture in proportions ranging between 90/10 and 80/20.
